# FASCICULE DE BREVET EUROPEEN

(11) **EP 0 618 722 B1**
(45) Date de publication et mention de la délivrance du brevet: **22.07.1998**
(21) Numéro de dépôt: 94200805.3
(22) Date de dépôt: 25.03.1994
(51) Int. Cl.: H04N 5/907

(54) **Procédé et dispositif pour décoder des images comprimées**
Verfahren und Einrichtung zur Dekodierung von komprimierten Bildern
Method and device for decoding compressed images

(30) Priorité: 31.03.1993 FR 9303778
(43) Date de publication de la demande: 05.10.1994
(73) Titulaire: LABORATOIRES D'ELECTRONIQUE PHILIPS S.A.S., 94450 Limeil-Brévannes (FR); Philips Electronics N.V., 5621 BA Eindhoven (NL)
(72) Inventeur: Fautier, Thierry, Société Civile S.P.I.D., F-75008 Paris (FR); Molter David, Société Civile S.P.I.D., F-75008 Paris (FR)
(74) Mandataire: Caron, Jean

(56) Documents cités:
- EP-A- 0 424 269
- TECHNISCHE RUNDSCHAU, vol.82, no.34, Août 1990, BERN CH pages 84 - 92 RYTER ET AL. 'Fernsehbilder qualitativ verbessern'

## Description

La présente invention concerne un procédé pour décoder des images codées numériquement avec compression, le nombre de pixels à traiter par unité de temps étant fixe, une image étant divisée en blocs comportant chacun plusieurs pixels dans chacune des directions horizontale et verticale, et la dite compression étant basée sur un traitement par blocs transmis séquentiellement, ces images étant chacune affichée sous la forme de deux trames, et pouvant être d'au moins trois types, à savoir des images dites "intra", codées en absolu c'est-à-dire sans référence par rapport à d'autres images, des images dites "prédites", codées en faisant référence à une précédente image intra ou prédite, et des images de type dit "bidirectionnel" codées à partir d'au moins deux autres images chacune intra ou prédite, certains couples d'une image intra ou prédite et d'une image de type bidirectionnel étant tels qu'une image intra ou prédite sert au codage ou au décodage de l'image de type bidirectionnel devant être affichée avant elle, et un espace mémoire étant prévu pour y stocker des images nouvellement décodées ou en cours de décodage. Elle concerne aussi un dispositif pour la mise en oeuvre de ce procédé. Elle s'applique en télévision numérique, que ce soit en définition standard ou en haute définition.

Les algorithmes de compression d'images à bas débit utilisent des traitements temporels qui nécessitent une capacité de mémorisation importante.
Des systèmes connus font appel a une gestion mémoire au niveau de l'image. Cependant cette méthode trouve ses limites lorsque la taille mémoire nécessaire à cette gestion fait appel à un trop grand nombre de boîtiers mémoires.

L'invention tire parti du fait que le nombre de pixels à traiter par unité de temps est fixe. Une conséquence directe est que le nombre de pixels à coder dans une image, et par conséquent le nombre de mots mémoire nécessaires au stockage des images, est borné, et les algorithmes de compression d'images sont basés sur un traitement par blocs, transmis séquentiellement. L'invention tire également profit du fait que les algorithmes de compression d'images opèrent sur des images elles mêmes constituées de 2 trames (paire et impaire).
L'invention procure un procédé économique, en coût global du décodeur et de la mémoire, qui permet de stocker les images décodées dans une taille mémoire minimum sans compliquer trop la gestion de cette mémoire, en tenant compte des types de mémoires disponibles. Elle résout ainsi le problème de l'augmentation du nombre de boîtiers mémoire destinés au stockage des images décodées.
Ce but est atteint du fait que le dit espace mémoire est organisé en cinq pages, dont quatre pages sont utilisées pour stocker chacune une trame d'image de type intra ou prédite et la cinquième est divisée en zones fractionnaires ayant chacune une capacité d'une fraction entière d'une trame, zones qui sont utilisées pour stocker chacune une fraction de trame d'une image de type bidirectionnel, fraction représentant une bande horizontale ayant la même largeur que celle de l'image et, les images de type bidirectionnel étant décodées par étapes successives d'une fraction de trame ou d'image à la fois, les fractions nouvellement décodées ou en cours de décodage sont placées au fur et à mesure chaque fois à l'adresse, dans la cinquième page, d'une zone fractionnaire dont le contenu a déjà été affiché.
Un bon compromis pour la taille des zones fractionnaires est obtenu lorsque les dites zones fractionnaires sont des zones "ligne de blocs" ayant chacune une capacité d'une ligne de blocs (c'est-à-dire la quantité de blocs qui, côte à côte, occupent la largeur d'une ligne d'image) et, les images de type bidirectionnel étant décodées par étapes successives d'une ligne de blocs à la fois, les dites lignes de blocs nouvellement décodées ou en cours de décodage sont placées au fur et à mesure chaque fois à l'adresse, dans la cinquième page, d'une zone ligne de blocs dont le contenu a déja été affiché.
Ainsi, lors du décodage d'images de qualité standard à 25 images par seconde, il est possible de placer toutes les pages dans un même boîtier mémoire d'une capacité de seize megabits, les images qui arrivent pour être décodées étant placées aussi dans ce qui reste de mémoire dans le même boîtier.
Avantageusement une gestion par zones fractionnaires est effectuée aussi pour des images intra ou prédites, gestion par laquelle toute zone fractionnaire utilisée par une partie de trame est re-allouée pour stocker une partie de trame nouvellement décodée ou en cours de décodage si son contenu a déjà été affiché et si elle n'est plus utilisée comme référence pour les compensations de mouvement.
L'idée de base de l'invention est de stocker entièrement les images intra et prédites par trames, aussi bien en luminance qu'en chrominance, et de stocker les images bidirectionnelles par lignes de blocs, en luminance et en chrominance. Cette organisation est liée au fait que les compensations de mouvement pour toutes les trames se font à partir des trames I ou P et que l'amplitude des vecteurs mouvement n'est pas limitée.
Dans le cas du décodage d'images de qualité standard à 25 images par seconde, pour ce qui est des images de type intra, le nombre de trames de retard entre le début du décodage d'une trame et le début de son affichage est de préférence de trois, alors que dans le cas d'images à 24 images par seconde devant être affichées à 60 trames par seconde, le nombre de trames de retard entre le début du décodage d'une trame intra et le début de son affichage est de préférence de quatre.
Un dispositif pour la mise en oeuvre du procédé ci-dessus est remarquable en ce qu'il comporte une mémoire partagée en quatre pages capables de contenir chacune une trame et en une cinquième page divisée en zones fractionnaires (une zone fractionnaire pouvant contenir une fraction entière d'une trame) et ayant une taille supérieure a la taille d'une trame plus la taille de deux zones fractionnaires, et en ce qu'il comporte en outre un élément gestionnaire muni de moyens pour gérer l'affichage de fractions de trame décodées, pour des images de type bidirectionnel, pour re-allouer toute zone fractionnaire afin d'y enregistrer une fraction de trame nouvellement décodée ou en cours de décodage si le contenu de cette zone a déjà été affiché, et de moyens pour fournir à l'élément de décodage les adresses mémoire où écrire le début de chaque fraction de trame nouvellement décodée ou en cours de décodage.
Avantageusement il est muni aussi de moyens de gestion par zones fractionnaires pour les pages un à quatre, ces moyens re-allouant, pour stocker une nouvelle fraction de trame nouvellement décodée ou en cours de décodage, toute zone fractionnaire si son contenu a déjà été affiché et s'il n'est plus utilisé comme référence pour les compensations de mouvement.

Ces aspects de l'invention ainsi que d'autres aspects plus détaillés apparaîtront plus clairement grâce à la description suivante d'un mode de réalisation non limitatif.

La figure 1 illustre le codage des images les unes par rapport aux autres.

La figure 2 est un diagramme des temps dans un procédé de l'art antérieur.

La figure 3 est un diagramme des temps dans le procédé de l'invention.

La figure 4 illustre la gestion d'une partie d'une page mémoire contenant des lignes de blocs d'images de type B.

La figure 5 est un diagramme des temps dans le procédé de l'invention, dans le cas d'images de cinéma à 24 images par seconde, à afficher par trames à 60 trames par seconde.

La figure 6 représente schématiquement le partitionnement d'un dispositif de décompression et décodage selon l'invention, avec une mémoire divisée en pages P1 à P4 et PB.

La figure 7 représente schématiquement la constitution de l'élément 2 de la figure 6.

Bien que l'invention concerne le décodage, une description préliminaire du codage permettra de mieux comprendre le procédé et le dispositif de décodage.
Les algorithmes de compression d'images animées font appel a des techniques de traitement spatial (transformation en cosinus discret, quantification adaptative, codage entropique) et de traitement temporel (compensation de mouvement, interpolation temporelle).
Des images de trois types sont définies :
- les images dites I ("intra"), codées sans référence par rapport à d'autres images,
- les images dites P ("prédites"), codées en faisant référence à la précédente image, celle-ci elle même de type I ou P,
- les images dites B, interpolées "bidirectionnellement", c'est-à-dire par rapport à une image I ou P qui la précède et une image I ou P qui la suit.

Les prédictions utilisées pour les images B sont toujours issues des images I ou P adjacentes. Ainsi les images I et P jouent un rôle particulier, puisqu'elles servent d'images de référence pour les compensations de mouvement.
Un exemple de séquence d'images avant codage est le suivant, la ligne du haut indiquant le type de l'image, I, P ou B qui va être fabriquée par le codeur à partir des images arrivantes qui bien-sûr, avant codage, sont toutes définies sans référence à d'autres images, et la ligne du bas indique l'ordre d'arrivée de ces images :
type : I B B P B B P B B...
ordre d'arrivée : 0 1 2 3 4 5 6 7 8...

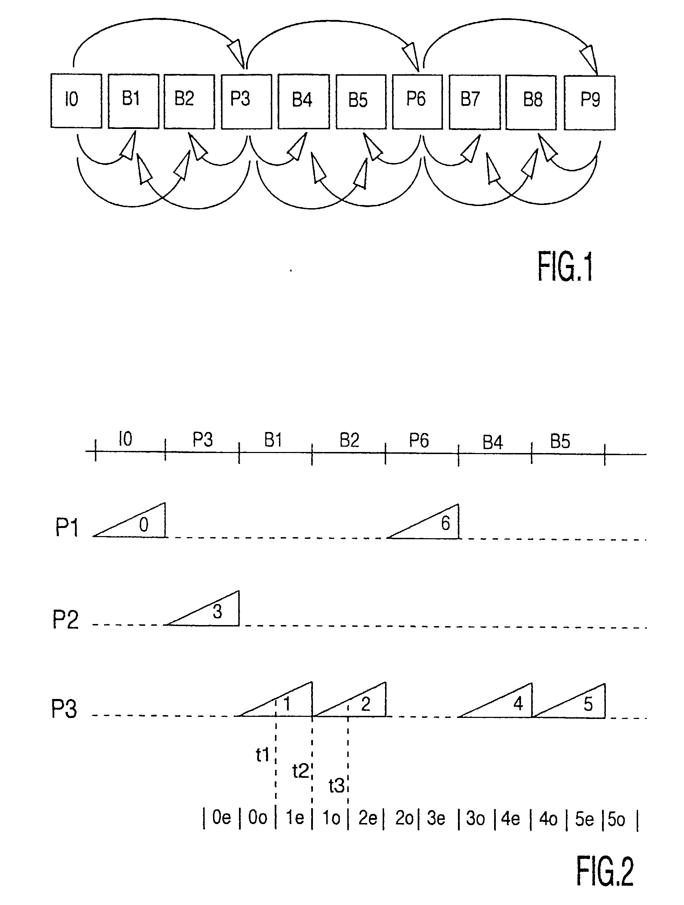

La figure 1 illustre à partir de quelles images les autres sont engendrées. L'image P3 est engendrée à partir de l'image I0, les images B1 et B2 sont engendrées à partir des images I0 et P3, l'image P6 est engendrée à partir de l'image P3, les images B4 et B5 sont engendrées à partir des images P3 et P6, l'image P9 est engendrée à partir de l'image P6, les images B7 et B8 sont engendrées à partir des images P6 et P9, etc.
La troisième image P3 est créée dans le codeur à partir de la première image I0, elle sort donc du codeur après cette dernière, les première et deuxième images de type B sont créées à partir des images I0 et P3, elles sortent donc du codeur après elles, l'image P6 est créée à partir de l'image P3, et ainsi de suite, et les images de l'exemple ci-dessus sortent du codeur (et donc arrivent au décodeur) dans l'ordre suivant :
type : I P B B P B B...
correspondant à l'ordre d'arrivée initial : 0 3 1 2 6 4 5...
Les dimensions horizontales et verticales d'une image sont appelées DIMH et DIMV. Le type de codage peut s'effectuer soit en mode image, auquel cas l'image est envoyée sous la forme d'un tableau de format DIMH x DIMV, soit en mode trame, auquel cas l'image est envoyée en deux trames successives de dimension DIMH x DIMV/2. Chaque image (ou trame) est découpée en blocs dont les dimensions horizontales et verticales sont respectivement H et V. Habituellement, H et V valent 8 pixels ou 16 pixels.

En ce qui concerne le décodage, l'ordre d'affichage des images à l'écran, c'est-à-dire l'ordre de sortie du décodeur, est le même que l'ordre d'arrivée au codeur :
type : I B B P B B P...
ordre de sortie : 0 1 2 3 4 5 6...
L'affichage est toujours effectué trame par trame et se fait sur la base de lignes.
Lorsque le type de codage est prédictif et interpolateur (images B), un ré-ordonnancement des images doit avoir lieu au niveau du décodeur, ce qui nécessite une gestion particulière de la mémoire.
La figure 2 illustre un exemple de chronogramme de gestion de mémoire d'images dans un décodeur de l'art antérieur utilisant 3 pages de mémoire, notées respectivement P1, P2, P3, pouvant contenir chacune une image. En haut de la figure est indiqué quelles images arrivent au décodeur : on y retrouve l'ordre indiqué plus haut (I0, P3, B1, etc).
Les hauteurs croissantes des triangles indiquent à chaque fois la progression du décodage et le remplissage correspondant de la page.
L'image I0 est placée au fur et à mesure de son décodage dans la page P1 (triangle 0). L'image P3 est placée au fur et à mesure de son décodage dans la page P2 (triangle 3). Ensuite l'image P6 sera inscrite dans la page P1, et ainsi de suite, une image I ou P sur deux sera écrite dans P1 et l'autre dans P2. L'image B1 est placée au fur et à mesure de son décodage dans la page P3 (triangle 1). En bas de la figure sont indiqués les temps d'affichage des images. Chaque image est affichée sous la forme de deux trames, ainsi l'image 0 se présente en deux trames respectivement paire (0e) et impaire (0o), puis l'image 1 se présente en deux trames respectivement paire (1e) et impaire (1o), et ainsi de suite. Pour le décodage des images bidirectionnelles, lorsque la moitié du temps de décodage de l'image B1 est écoulée (c'est-à-dire que sa première trame est décodée si l'image était codée en mode trame, ou que la moitié supérieure de l'image, soit une demi-trame paire et une demitrame impaire, est décodée si l'image était codée en mode image), on peut commencer à l'afficher (temps t1). Lorsque la trame 1e est affichée, on n'en a plus besoin et une partie de la page P3 est donc déja disponible (temps t2). On utilise cette partie de la page P3 ainsi que la partie qui se libère au cours de l'affichage de la trame 1o (entre les temps t2 et t3), pour y inscrire l'image B2 (triangle 2), que l'on pourra commencer à afficher lorsque la moitié du temps de décodage de cette image B2 sera écoulée (temps t3), et ainsi de suite. Ceci ne réclame pas de gestion particulière de la page P3 puisqu'on re-écrit la nouvelle image bidirectionnelle aux mêmes adresses que celle qui la précédait.

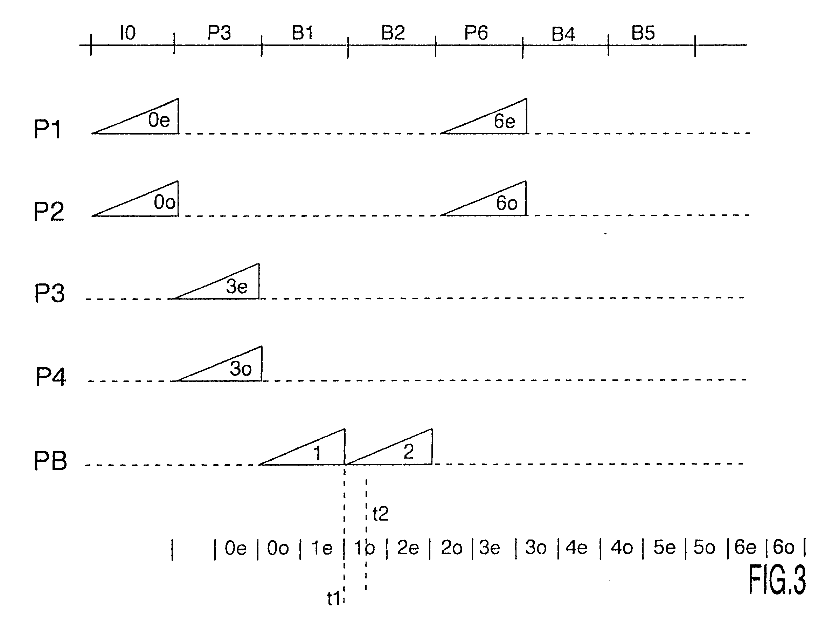

Dans le procédé de l'invention, on stocke d'une part deux images de référence, ce qui correspond à quatre pages contenant chacune une trame, notées P1, P2, P3, P4, utilisées pour le stockage de trames I ou P, et d'autre part on stocke des lignes de blocs dans une page notée PB qui est divisée en "zones ligne de blocs", et qui contient les lignes de blocs des images B décodées. On appelle "zone ligne de blocs", un espace mémoire pouvant contenir une ligne de blocs issus d'une trame, c'est-à-dire contenant V lignes de chacune DIMH pixels, pour la luminance. Un tel espace contient par exemple 720×16 pixels, en définition standard.
On supposera que le temps de décodage d'une image, noté Tdec est au plus égal à Timage, Timage étant égal à 40 ms dans un système 50 Hz ou 33 ms dans un système 60 Hz. La durée de décodage d'une ligne de blocs dépend du contenu de l'image à coder, et de plus est bornée. Le temps de décodage d'une ligne de blocs suit par conséquent une loi de probabilité complexe. On suppose que le temps de décodage est linéaire, c'est a dire que la durée de décodage d'une ligne de blocs est à peu près égale à (V/DIMV)*Tdec. Cependant, on envisage dans l'invention les dispositifs nécessaires au cas ou le décodage est en avance ou en retard par rapport au modèle utilisé.
Le diagramme temporel du déroulement du décodage est représenté figure 3. Ce séquencement correspond au cas ou les images sont affichées à un rythme double par rapport à celui auquel elles sont décodées. Ceci correspond aux cas d'un codage a 30 Hz et d'un affichage à 60 Hz, ou d'un codage a 25 Hz et d'un affichage à 50 Hz. Le cas où les rythmes de codage et d'affichage sont différents est abordé plus loin.
A partir du temps t1 sur la figure 3, la page PB contient la trame impaire de B1. Néanmoins l'image B2 pourra être écrite pourvu que la taille de la page PB soit supérieure a la taille d'une trame plus la taille d'une ligne de blocs dans le cas d'un codage en mode trame et de deux lignes de blocs en mode image. On en déduit que la taille mémoire minimum "TailleminE" de la page PB est : TailleminE = (DIMH x DIMV/2 ) + (2 x V x DIMH).
Ce procédé permet plus de flexibilité dans la gestion de la mémoire par rapport au système connu basé sur une gestion mémoire au niveau de l'image ou de la trame. En effet dans la figure 3, entre le début et la fin de l'affichage de la trame B1 paire, DIMV /2xV zones ligne de blocs ont été libérés par le processus d'affichage. Durant cette période, ces zones mémoire auront pu être utilisées par le processus de décodage pour y stocker la seconde partie de l'image B1 décodée.

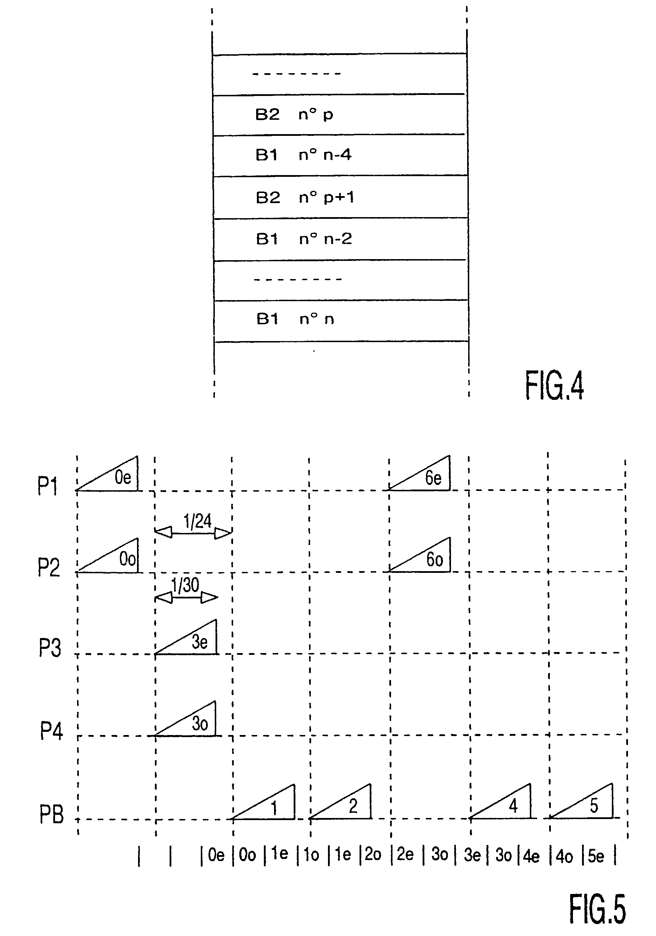

La figure 4 représente un état d'une partie de la page PB, chaque rectangle représentant une zone ligne de blocs. Il s'agit de l'état à l'instant t2 de la figure 3, c'est-à-dire alors que l'image 1o impaire est à moitié affichée. L'indication "B2 n° p+1", par exemple, signifie que la zone ligne de blocs en question contient la ligne de blocs numéro "p+1" de l'image B numéro 2. Une ligne de blocs "B1 n° n-6" qui était placée avant B2 n°p a déja été affichée et la zone mémoire (-----) est donc libre. De même une ligne de blocs entre "B1 n° n-2" et "B1 n° n" a déja été affichée et la zone mémoire est donc libre.
Ce type de gestion permet l'utilisation pour la page PB d'un espace mémoire compris entre la taille minimum, (DIMH x DIMV/2 ) + (2 x V x DIMH) et la taille maximum, DIMH x DIMV.
Pour un système où le temps de décodage est linéaire la taille nécessaire pour la page PB est de 2/3 x DIMH x DIMV.
Le principe décrit ci dessus s'applique de la même façon à un système 60 Hz, les pages P1, P2, P3, P4, PB étant toujours gérées par lignes de blocs. Cependant, dans le cas d'un système à 60 Hz, un décodeur doit être capable de décoder une séquence codée à 30 ou 60 Hz et aussi une séquence de film codée à 24 Hz (alors que dans un système 50 Hz, toutes les séquences sont codées à 25 ou 50 Hz).

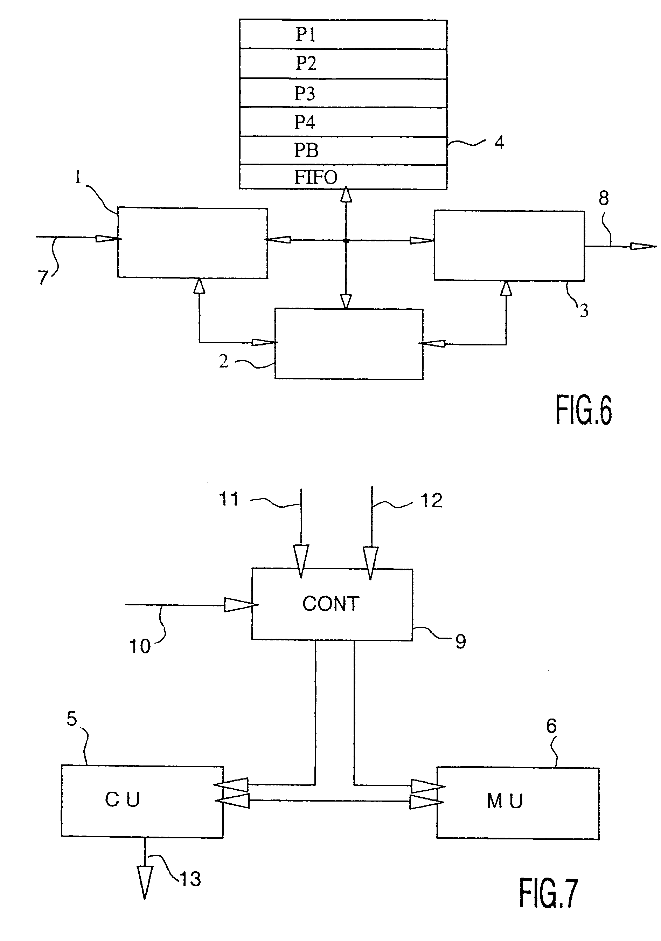

La figure 5 représente le séquencement du décodage à 24 Hz et de l'affichage à 60 Hz. Les images devant être présentées à 30 Hz, les images décodées ne durent que 1/30^{e} de seconde. Par contre le rythme de codage est de 24 Hz, c'est-à-dire que les images à décoder arrivent tous les 1/24^{e} de seconde. Pour obtenir une fréquence d'affichage plus grande que le nombre d'images disponibles, toutes les deux images une trame est affichée deux fois (ici : 1e affichée à nouveau après 1o, 3o affichée à nouveau après 3e, etc. En outre, du fait que cette 2^{e} trame supplémentaire 1e est paire, la trame suivante doit être impaire ce qui amène à afficher à sa suite 2o et non 2e). Un décodeur 60 Hz doit être capable de décoder une suite de séquences codées soit à 30 Hz, soit à 24
Hz, et le nombre de trames de retard entre l'affichage et le décodage doit être constant. Par conséquent, en 60 Hz le retard entre le décodage et l'affichage est toujours fixé à quatre trames. Ceci constitue une différence importante par rapport à un système 50 Hz dans lequel le nombre de trames de retard entre la première trame décodée et la première trame affichée est de trois.
Dans le cas du décodage d'une séquence codée à 30 Hz et affichée à 60 Hz, c'est-à-dire d'un décodage à 60 Hz, pour que le début du décodage de l'image 2 ne soit pas retardé, la page PB doit contenir une image complète (pour stocker l'image B1 entière) et deux lignes de blocs pour stocker la première ligne de blocs issue du décodage de l'image B2. La taille minimum en 60 Hz pour E est (DIMH x DIMV ) + (2 x V x DIMH).

La figure 6 représente le partitionnement d'un système de de décompression et décodage d'images animées selon l'invention. Il est découpé fonctionnellement en quatre éléments:
- une mémoire 4 divisée en quatre pages P1, P2, P3, P4, utilisée pour contenir chacune une trame intra ou prédite, et une cinquième page PB qui est divisée en zones dites "zones ligne de blocs" utilisées pour stocker chacune une ligne de blocs d'une image bidirectionnelle. La mémoire 4 contient en outre une zone notée "FIFO" utilisée pour stocker les images qui arrivent au décodeur.
- un élément 1 de décodage, en charge du décodage et de la décompression des images qu'il reçoit sous forme comprimée par un conducteur 7, et de l'écriture dans la mémoire externe 4,
- un élément d'affichage 3 qui relit les images décodées depuis la mémoire externe pour les fournir via un conducteur 8 à un afficheur quelconque non représenté, en synchronisme avec les synchronisations vidéo,
- un élément gestionnaire de mémoire d'images 2, qui permet la mise en oeuvre de l'invention.
L'élément gestionnaire de mémoire d'images 2 fournit à l'élément de décodage 1 :
- les adresses mémoire où écrire le début de chaque ligne de blocs de l'image en cours de décodage,
- les adresses mémoire des trames de prédiction utilisées pour les compensations de mouvement ( références passée et future).
Pour des images de type B, cet élément fonctionne à partir de la règle suivante : toute zone utilisée par une ligne de bloc peut être re-allouée pour stocker une ligne de bloc en cours de décodage si son contenu a déjà été affiché. Un tel gestionnaire de mémoire est bien connu en soi dans le domaine de l'informatique, et la description par ses fonctions est donc suffisante pour qu'un homme de métier sache le réaliser.
Pour chaque nouvelle ligne de blocs en cours de décodage issue d'une image B, l'élément gestionnaire de mémoire d'images 2 alloue deux lignes de blocs en cas de codage image et une ligne de blocs en cas de codage trame. Si aucune mémoire ligne de bloc n'est disponible, le processus de décodage est stoppé jusqu'à ce que deux lignes de blocs soient disponibles dans la page PB. Cette situation peut arriver lorsque les images B sont très fortement compressées, auquel cas le décodage peut être réalisé plus rapidement que dans un cas où il faut appliquer un décodage DCT et des compensations de mouvement "demi pixel" (c'est-à-dire avec calculs d'interpolation entre deux pixels). Ce cas peut être évité en réservant au départ une zone plus importante pour la page PB.
L'élément gestionnaire de mémoire d'images 2 est aussi chargé, pour chaque nouvelle image I ou P décodée, d'allouer deux zones mémoires contenant des trames déjà affichées, pour stocker l'image à décoder. Si l'image contenue dans une zone trame est en cours d'affichage, une gestion au niveau de lignes de blocs peut aussi être effectuée par l'élément gestionnaire de mémoire d'images, pour des images I ou P (en plus de celle qu'il réalise pour des images B). L'élément gestionnaire de mémoire d'images 2 fonctionne alors à partir de la règle suivante : toute zone utilisée par une trame ou ligne de bloc peut être re-allouée pour stocker une trame ou ligne de bloc de même type en cours de décodage si son contenu a déjà été affiché et si elle n'est plus utilisée comme référence pour les compensations de mouvement. Ainsi, si la ligne de blocs numéro "n" d'une mémoire trame a été complètement affichée, elle peut être utilisée pour stocker la ligne de bloc numéro "p" (avec p<n) de l'image I ou P en cours de décodage, si aucune autre mémoire de trame n'est disponible. Ainsi par exemple, dans le cas d'un codage purement prédictif (c'est-à-dire sans images de type B, les images P arrivant alors au décodeur à cadence plus élevée que dans le cas où des images B viennent s'insérer entre les images P), la mémoire P1 ou la mémoire P3, organisées en lignes de blocs, peuvent contenir dans leur partie basse le bas d'une trame paire et dans leur partie haute le début de la trame paire suivante, et de même les mémoires P2 et P4, organisées en lignes de blocs, peuvent contenir dans leur partie basse le bas d'une trame impaire et dans leur partie haute le début de la trame impaire suivante.
L'élément gestionnaire de mémoire d'images 2 fournit à l'élément d'affichage les adresses mémoire correspondant au début de chaque ligne de blocs de l'image en cours d'affichage. A chaque demande de l'élément d'affichage, toutes les V lignes d'affichage, l'élément gestionnaire de mémoire d'images 2 envoie l'adresse mémoire externe où est situé le début de la ligne de blocs à afficher.
Puisque le processus d'affichage doit être prioritaire sur la mémoire, il ne doit jamais être en attente de données nécessaires à l'affichage, sauf si le processus de décodage devait être interrompu par défaut de données compressées à l'entrée du processus de décodage. Le processus d'affichage libère la mémoire par zones ligne de blocs, qui sont ensuite re-allouées par l'élément gestionnaire de mémoire d'images 2 pour stocker des lignes de blocs en cours de décodage.
La figure 7 représente le partitionnement interne de l'élément gestionnaire de mémoire d'images 2 de la figure 6. Cet élément est constitué de trois modules : un module de contrôle 9, un module "unité mémoire" 6, et un module "unité de calcul" 5. Le module de contrôle 9 reçoit de l'élément de décodage 1, via un conducteur 10, les informations issues du train binaire correspondant aux caractéristiques de l'image décodée, dont notamment :
- le type d'image,
- le type de codage,
- le type de sous-échantillonnage de la chrominance,
Il reçoit aussi de l'élément de décodage, via un conducteur 11, des demandes d'allocation mémoire pour la prochaine ligne de blocs a décoder.
A chaque demande d'adresse mémoire provenant de l'élément de décodage, le module de contrôle va scruter l'unité mémoire (notée MU) qui contient les informations relatives a chaque ligne de blocs présente dans la mémoire externe. Si aucune zone ligne de blocs n'est disponible le décodage est stoppé dans l'attente de la libération de l'espace mémoire correspondant à la ligne de bloc à mémoriser. Si une zone ligne de bloc est disponible, l'unité MU fournit un index à l'unité de calcul 5 (notée CU) qui va générer l'adresse mémoire correspondante dans la mémoire externe 4, et le fournir sur un conducteur 13. Cette adresse est ensuite envoyée par l'unité CU vers l'élément de décodage 1. L'élément d'affichage 3 demande au module 9, via un conducteur 12, l'adresse mémoire à laquelle l'élément d'affichage doit aller lire en mémoire externe 4 la prochaine ligne de blocs a afficher.
A chaque demande d'adresse mémoire provenant de l'élément d'affichage, le module de contrôle va scruter l'unité MU, laquelle fournit a l'unité CU un index qui sera décodé pour fournir l'adresse mémoire externe. Si cette adresse n'est pas disponible, autrement dit si le décodage ne s'est pas effectué correctement, l'élément gestionnaire de mémoire d'images 2 fournit à l'élément d'affichage 3 des adresses de zones mémoire ligne de blocs appartenant à la dernière image I ou P disponible en mémoire en vue de fournir une image assez proche de l'image à afficher normalement.
L'unité MU est constituée d'une mémoire et d'un générateur d'adresses.
Etant donné que le nombre de lignes de blocs stocké en mémoire est borné, on utilise comme adresse de la mémoire de l'unité MU l'index de la ligne de blocs en mémoire externe. La donnée associée à cette adresse est constituée de 2 champs :
- donnée : qui correspond à l'index de la ligne de blocs dans l'image
- contrôle : qui contient toutes les informations de contrôle associées a la ligne de bloc en mémoire.
Le module de contrôle 9 travaille toujours par anticipation par rapport aux demandes des éléments de décodage 1 et d'affichage 3. Ainsi pendant le décodage (respectivement l'affichage) de la ligne de blocs numéro "n", il calcule l'adresse mémoire où écrire (respectivement lire) la ligne de blocs numéro "n+1".
Etant donné que la gestion de la mémoire se fait pour les images B sur la base de lignes de blocs, l'extension mémoire se fera par ligne de blocs, ce qui correspond à des incréments de faible coût mémoire.
D'autre part, des essais sur des séquences d'images test peuvent être réalisés avec différentes valeurs de Tdec et TailleE, sans connaître à priori une borne exacte pour le temps de décodage Tdec, afin de trouver le couple de valeurs optimales pour Tdec et TailleminE.
D'autre part, si la taille mémoire allouée aux lignes de blocs pour les images B est fixée, on peut déterminer la fréquence de travail du système de décodage pour aboutir à la valeur de Tdec qui satisfait les contraintes issues de la taille mémoire allouée pour le stockage des lignes de blocs des images B.
L'invention prend tout son intérêt dans un système 50 Hz où une gestion mémoire par image conduirait à stocker trois images soit, pour un format de sous-échantillonnage d'un facteur deux en horizontal et en vertical pour la chrominance, 3x720x576x12 = 14.93 10E6 bits. Si on désire bâtir un système de décodage d'images en utilisant 16 Mbits de DRAM, il ne reste que 1.847 10E6 bits disponibles pour stocker les images comprimées, correspondant à un débit équivalent d' environ 7.4 10E6 bits/s.
L'invention n'utilise que 14.197 10 E06 bits pour la partie mémoire pixels et permet d'utiliser par conséquent dans un système à 16 Mbits de mémoire 2.58 10E6 bits pour stocker les images comprimées, qui correspond a un débit d'environ 10,4 10E6 bit/s.
Le gain en mémoire en utilisant l'invention correspond à 733 10E3 bits, et permet d'adresser des débits plus élevés de 40 % par rapport à un schéma classique de gestion mémoire.

## Revendications

1. Procédé pour décoder des images codées numériquement avec compression, le nombre de pixels à traiter par unité de temps étant fixe, une image étant divisée en blocs comportant chacun plusieurs pixels dans chacune des directions horizontale et verticale, et la dite compression étant basée sur un traitement par blocs transmis séquentiellement, ces images étant chacune affichée sous la forme de deux trames, et pouvant être d'au moins trois types, à savoir des images dites "intra", codées en absolu c'est-à-dire sans référence par rapport à d'autres images, des images dites "prédites", codées en faisant référence à une précédente image intra ou prédite, et des images de type dit "bidirectionnel" codées à partir d'au moins deux autres images chacune intra ou prédite, certains couples d'une image intra ou prédite et d'une image de type bidirectionnel étant tels qu'une image intra ou prédite sert au codage ou au décodage de l'image de type bidirectionnel devant être affichée avant elle, et un espace mémoire étant prévu pour y stocker des images nouvellement décodées ou en cours de décodage, caractérisé en ce que le dit espace mémoire est organisé en cinq pages, dont quatre pages sont utilisées pour stocker chacune une trame d'image de type intra ou prédite et la cinquième est divisée en zones fractionnaires ayant chacune une capacité d'une fraction entière d'une trame, zones qui sont utilisées pour stocker chacune une fraction de trame d'une image de type bidirectionnel, fraction représentant une bande horizontale ayant la même largeur que celle de l'image et, les images de type bidirectionnel étant décodées par étapes successives d'une fraction de trame ou d'image à la fois, les fractions nouvellement décodées ou en cours de décodage sont placées au fur et à mesure chaque fois à l'adresse, dans la cinquième page, d'une zone fractionnaire dont le contenu a déjà été affiché.

2. Procédé selon la revendication précédente, caractérisé en ce que les dites zones fractionnaires sont des zones "ligne de blocs" ayant chacune une capacité d'une ligne de blocs c'est-à-dire la quantité de blocs qui, côte à côte, occupent la largeur d'une ligne d'image et, les images de type bidirectionnel étant décodées par étapes successives d'une ligne de blocs à la fois, les dites lignes de blocs nouvellement décodées ou en cours de décodage sont placées au fur et à mesure chaque fois à l'adresse, dans la cinquième page, d'une zone ligne de blocs dont le contenu a déja été affiché.

3. Procédé selon l'une des revendications 1 ou 2, caractérisé en ce qu'une gestion par zones fractionnaires est effectuée aussi pour des images intra ou prédites, gestion par laquelle toute zone fractionnaire utilisée par une partie de trame est re-allouée pour stocker une partie de trame nouvellement décodée ou en cours de décodage si son contenu a déjà été affiché et si elle n'est plus utilisée comme référence pour les compensations de mouvement.

4. Procédé selon l'une quelconque des revendications 1 à 3, pour le décodage d'images de qualité standard à 25 images par seconde, caractérisé en ce que toutes les pages sont placées dans un même boîtier mémoire d'une capacité de seize megabits, et les images qui arrivent pour être décodées sont placées aussi dans ce qui reste de mémoire dans le même boîtier.

5. Procédé selon l'une quelconque des revendications 1 à 4, pour le décodage d'images de qualité standard à 25 images par seconde, caractérisé en ce que, pour ce qui est des images de type intra, le nombre de trames de retard entre le début du décodage d'une trame et le début de son affichage est de trois.

6. Procédé selon l'une quelconque des revendications 1 à 3, pour le cas d'images à 24 images par seconde devant être affichées à 60 trames par seconde, caractérisé en ce que, pour ce qui est des images de type intra, le nombre de trames de retard entre le début du décodage d'une trame et le début de son affichage est de quatre.

7. Dispositif pour décoder des images codées numériquement sous forme comprimée, le nombre de pixels à traiter par unité de temps étant fixe et, une image étant divisée en blocs représentant chacun une fraction de l'image, les algorithmes de compression d'images étant basés sur un traitement par blocs transmis séquentiellement, ces images étant chacune codée sous la forme de deux trames, et pouvant être d'au moins trois types, à savoir des images dites "intra", codées en absolu c'est-à-dire sans référence par rapport à d'autres images, des images dites "prédites", codées en faisant référence à une précédente image intra ou prédite, et des images de type dit "bidirectionel" codées à partir d'au moins deux autres images chacune intra ou prédite, au moins un couple d'une image intra ou prédite et d'une image de type bidirectionnel étant tel que l'image intra ou prédite devant être affichée après sert au codage de l'image de type bidirectionnel devant être affichée avant, muni d'une mémoire contenant des images nouvellement décodées ou en cours de décodage, et d'un élément de décodage chargé du décodage des images qu'il reçoit sous forme comprimée et de l'écriture des images décodées ou en cours de décodage dans la mémoire, caractérisé en ce que, cette mémoire étant partagée en quatre pages capables de contenir chacune une trame et en une cinquième page divisée en zones fractionnaires une zone fractionnaire pouvant contenir une fraction entière d'une trame et ayant une taille supérieure a la taille d'une trame plus la taille de deux zones fractionnaires, il comporte en outre un élément gestionnaire muni de moyens pour gérer l'affichage de fractions de trame ou d'image décodées, pour des images de type bidirectionnel, pour re-allouer toute zone fractionnaire afin d'y enregistrer une fraction de trame nouvellement décodée ou en cours de décodage si le contenu de cette zone a déjà été affiché, et de moyens pour fournir à l'élément de décodage les adresses mémoire où écrire le début de chaque fraction de trame ou d'image nouvellement décodée ou en cours de décodage.

8. Dispositif selon la revendication précédente, caractérisé en ce qu'il est muni aussi de moyens de gestion par zones fractionnaires pour les pages un à quatre, ces moyens re-allouant, pour stocker une nouvelle fraction de trame nouvellement décodée ou en cours de décodage, toute zone fractionnaire si son contenu a déjà été affiché et s'il n'est plus utilisé comme référence pour les compensations de mouvement.

## Patentansprüche

1. Verfahren zum Dekodieren kodierter digitaler komprimierter Bilder, wobei die Anzahl zu verarbeitender Pixel pro Zeiteinheit fest ist, ein Bild in Blöcke mit jeweils mehreren Pixeln in jeweils die horizontale und vertikale Richtung unterteilt wird und die besagte Komprimierung auf einer Verarbeitung nach sequentiell übertragenen Blöcken gründet, diese Bilder jeweils in der Form von zwei Rastern angezeigt werden und mindestens drei verschiedener Typen sein können, d.h. sogenannte "Intra"-Bilder, absolut kodiert, also ohne Bezugnahme auf andere Bilder, sogenannte "Prognose"-Bilder, kodiert unter Bezugnahme auf ein vorhergehendes Intra- oder Prognosebild, und Bilder des sogenannten "Zweirichtungs"-Typs, kodiert anhand von mindestens zwei anderen jeweiligen Intra- oder Prognosebildern, wobei gewisse Paare eines Intra- oder Prognosebilds und eines Bilds vom Zweirichtungstyp derart sind, daß ein Intra- oder Prognosebild der Kodierung oder Dekodierung des Bildes vom Zweirichtungstyps dient, das vor ihm anzuzeigen ist, und ein Speicherplatz vorgesehen ist, um neu dekodierte oder in Dekodierung befindliche Bilder zu speichern, dadurch gekennzeichnet, daß der besagte Speicherplatz auf fünf Seiten organisiert wird, wovon vier Seiten zur jeweiligen Speicherung eines Bildrasters vom Intra- oder Prognosetyp verwendet werden und die fünfte in fraktionelle Zonen mit einer jeweiligen Kapazität einer ganzen Rasterfraktion unterteilt wird, während die Zonen zum jeweiligen Speichern einer Rasterfraktion eines Bilds vom Zweirichtungstyp verwendet werden, die Fraktion ein horizontales Band selber Breite wie die des Bildes darstellt und die Bilder vom Zweirichtungstyp in aufeinanderfolgenden Etappen jeweils einer Raster- oder Bildfraktion dekodiert werden, die neu dekodierten oder in Dekodierung befindlichen Fraktionen nach und nach jeweils an die Adresse in der fünften Seite einer fraktionellen Zone gebracht werden, deren Inhalt bereits angezeigt wurde.

2. Verfahren nach dem vorhergehenden Anspruch, dadurch gekennzeichnet, daß die besagten fraktionellen Zonen "Blockzeilen"-Zonen mit einer jeweiligen Kapazität einer Blockzeile sind, d.h. die Anzahl Blöcke, die aneinandergereiht die Breite einer Bildzeile einnimmt, und die Bilder vom Zweirichtungstyp in aufeinanderfolgenden Etappen jeweils einer Bildzeile dekodiert werden, die besagten neu dekodierten oder in Dekodierung befindlichen Blockzeilen nach und nach jeweils an die Adresse in der fünften Seite einer Blockzeilenzone gebracht werden, deren Inhalt bereits angezeigt wurde.

3. Verfahren nach einem der Ansprüche 1 oder 2, dadurch gekennzeichnet, daß eine vorteilhafte Verwaltung nach fraktionellen Zonen auch für Intra- oder Prognosebilder vorgenommen wird, wobei für diese Verwaltung jede von einem Teilraster verwendete Zone neu zugeteilt wird, um ein neu dekodiertes oder in Dekodierung befindliches Teilraster zu speichern, wenn sein Inhalt bereits angezeigt wurde und es nicht mehr als Bezugnahme für Bewegungskompensationen verwendet wird.

4. Verfahren nach einem beliebigen der Ansprüche 1 bis 3 für die Dekodierung von Bildern mit Standardqualität zu 25 Bildern pro Sekunde, dadurch gekennzeichnet, daß alle Bilder in denselben Speicherplatz einer Kapazität von sechzehn Megabits gebracht werden, und die zur Dekodierung ankommenden Bilder werden ebenfalls in den verbleibenden Speicher desselben Platzes gebracht.

5. Verfahren nach einem beliebigen der Ansprüche 1 bis 4 für die Dekodierung von Bildern mit Standardqualität zu 25 Bildern pro Sekunde, dadurch gekennzeichnet, daß für die Bilder vom Intratyp die Anzahl Verzögerungsraster zwischen dem Anfang der Dekodierung eines Rasters und dem Anfang seiner Anzeige drei ist.

6. Verfahren nach einem beliebigen der Ansprüche 1 bis 3, im Falle Bilder zu 24 Bildern pro Sekunde mit 60 Rastern pro Sekunde angezeigt werden müssen, dadurch gekennzeichnet, daß für die Bilder vom Intratyp die Anzahl Verzögerungsraster zwischen dem Anfang der Dekodierung eines Rasters und dem Anfang seiner Anzeige vier ist.

7. Verfahren zum Dekodieren kodierter digitaler komprimierter Bilder, wobei die Anzahl zu verarbeitender Pixel pro Zeiteinheit fest ist, ein Bild in Blöcke unterteilt wird, die jeweils eine Bildfraktion darstellen, die Bild-Komprimierungsalgorithmen auf einer Verarbeitung nach sequentiell übertragenen Blöcken gründet, diese Bilder jeweils in der Form von zwei Rastern kodiert werden und mindestens drei verschiedener Typen sein können, d.h. sogenannte "Intra"-Bilder, absolut kodiert, also ohne Bezugnahme auf andere Bilder, sogenannte "Prognose"-Bilder, kodiert unter Bezugnahme auf ein vorhergehendes Intra- oder Prognosebild, und Bilder des sogenannten "Zweirichtungs"-Typs, kodiert anhand von mindestens zwei anderen jeweiligen Intra- oder Prognosebildern, wobei mindestens ein Paar eines Intra- oder Prognosebilds und eines Bilds vom Zweirichtungstyp derart ist, daß das nachher anzuzeigende Intra- oder Prognosebild der Kodierung des Bildes vom Zweirichtungstyps dient, das vorher anzuzeigen ist, versehen mit einem Speicher, der neu dekodierte oder in Dekodierung befindliche Bilder enthält, und einem Dekodierelement, mit der Dekodierung der Bilder beauftragt, die es in komprimierter Form erhält, und dem Eintragen der dekodierten oder in Dekodierung befindlichen Bilder in den Speicher, dadurch gekenzeichnet, daß dieser Speicher in vier Seiten geteilt ist, jeweils dazu in der Lage, ein Raster und eine fünfte, in fraktionelle Zonen unterteilte Seite zu enthalten, während eine fraktionelle Zone eine vollständige Fraktion eines Rasters enthalten kann, mit einer über der Größe eines Rasters liegenden Größe plus der Größe zweier fraktioneller Zonen, es zudem ein Verwaltungselement enthält, versehen mit Mitteln zum Verwalten der Anzeige der dekodierten Rasterfraktionen oder Bilder für Bilder vom Zweirichtungstyp, um eine gesamte fraktionelle Zone neu zuzuteilen, um darin eine neu dekodierte oder in Dekodierung befindliche Rasterfraktion aufzuzeichnen, wenn der Inhalt dieser Zone bereits angezeigt wurde, und Mittel, um dem Dekodierelement die Speicheradressen zu liefern, an die der Anfang jeder neu dekodierten oder in Dekodierung befindlichen Rasterfraktion oder jedes entsprechenden Bildes einzutragen ist.

8. Einrichtung nach einem der vorhergehenden Ansprüche, dadurch gekennzeichnet, daß sie zudem mit Verwaltungsmitteln pro fraktioneller Zone für die Seiten eins bis vier versehen ist, wobei diese Mittel zum Speichern einer neu dekodierten oder in Dekodierung befindlichen neuen Rasterfraktion eine gesamte fraktionelle Zone neu zuteilen, wenn ihr Inhalt bereits angezeigt wurde und sie nicht mehr als Bezugnahme für die Bewegungskompensationen verwendet wird.

## Claims

1. A method of decoding frames which have been encoded digitally while using compression, in which the number of pixels to be treated per unit of time is fixed and a frame is divided into blocks each comprising several pixels in each horizontal and vertical direction, said compression being based on a treatment in blocks transmitted sequentially, while each frame is displayed in the form of two fields and may be of at least three types, *viz*. of the intraframe type, encoded in absolute values, *i.e.* without reference to other frames, predicted-type frames encoded with reference to a preceding intraframe or predicted frame, and frames of the bidirectional type encoded with reference to at least two other frames which are each intraframes or predicted frames, while certain couples of an intraframe or a predicted frame and of a frame of the bidirectional type are such that an intraframe or predicted frame serves for encoding or for decoding the frame of the bidirectional type which must be displayed prior thereto, and a memory space for storing the frames which have just been decoded or are being decoded, characterized in that the memory space is arranged in the form of five pages, four pages of which are used for storing a field of the intraframe type or of the predicted type each and the fifth page is divided into sections each having a capacity of an entire part of a field, which sections are used for storing a part of the field of a frame of the bidirectional type each, said part representing a horizontal band having the same width as that of the frame and, with the frames of the bidirectional type being decoded in successive stages of a part of the field or frame at a time, the parts which have just been decoded or are being decoded are located progressively each time at the address, in the fifth page, of a section whose contents have already been displayed.

2. A method as claimed in Claim 1, characterized in that said sections are line-of-block zones each having a capacity of one line of blocks, *i.e.* the quantity of blocks which, side by side, occupy the length of a frame line, and, with the frames of the bidirectional type being decoded in successive stages of one line of blocks at a time, said lines of blocks which have just been decoded or are being decoded are located progressively each time at the address, in the fifth page, of a line-of-block zone whose contents have already been displayed.

3. A method as claimed in Claim 1 or 2, characterized in that a sectional control is effected also for the intraframes or predicted frames, for which control each section used by a part of the field is reallocated for storing a part of the field which has just been decoded or is being decoded if the contents of this section have already been displayed and if it is no longer used as a reference for the motion compensations.

4. A method as claimed in any one of Claims 1 to 3 for decoding images of the standard quality of 25 frames per second, characterized in that all the pages are located in one and the same memory unit having a capacity of 16 megabits, while the frames received for decoding are also located in the remaining part of the memory in the same unit.

5. A method as claimed in any one of Claims 1 to 4 for decoding images of the standard quality of 25 frames per second, characterized in that for the intraframes the number of delay fields between the start of decoding a field and the start of its display is three.

6. A method as claimed in any one of Claims 1 to 3 for the case where images of 24 frames per second must be displayed at 60 fields per second, characterized in that for the intraframes the number of delay fields between the start of decoding a field and the start of its display is four.

7. A device for decoding frames which have been encoded digitally in a compressed form, in which the number of pixels to be treated per unit of time is fixed and a frame is divided into blocks each representing a part of the frame, while with the compression algorithms for the frames being based on a treatment per block transmitted sequentially, said frames are each encoded in the form of two fields and may be of at least three types, *viz.* of the intraframe type encoded in absolute values, *i.e.* without reference to other frames, predicted-type frames encoded with reference to a preceding intraframe or predicted frame, and frames of the bidirectional type encoded with reference to at least two other frames which are each intraframes or predicted frames, while at least one couple of an intraframe or a predicted frame and of a frame of the bidirectional type is such that the intraframe or predicted frame which must be displayed afterwards serves for encoding the frame of the bidirectional type which must be displayed prior thereto, a memory comprising frames which have just been decoded or are being decoded, and a decoding element for decoding the frames which it receives in a compressed form and for writing the frames which have been decoded or are being decoded into the memory, characterized in that said memory is divided into four pages which are capable of containing a field each and into a fifth page divided into sections, a section may contain a complete part of a field, and having a size which is larger than the size of a field plus the size of two sections, said memory also comprising a control element provided with means for controlling the display of decoded parts of the field or the frame for frames of the bidirectional type so as to reallocate each section in order to register a part of the field which has just been decoded or is being decoded if the contents of this section have already been displayed, and means for applying the memory addresses to the decoding element, at which addresses the start of each part of the field or the frame which has just been decoded or is being decoded is written.

8. A device as claimed in the preceding Claim, characterized in that it is also provided with section control means for the pages one to four, by which means each section is reallocated for storing a new part of the field which has just been decoded or is being decoded if the contents of this section have already been displayed and if it is no longer used as a reference for the motion compensations.
